# EUROPÄISCHE PATENTSCHRIFT

(11) **EP 2 289 716 B1**
(45) Veröffentlichungstag und Bekanntmachung des Hinweises auf die Patenterteilung: **24.04.2013**
(21) Anmeldenummer: 10008349.2
(22) Anmeldetag: 11.08.2010
(51) Int. Cl.: B60R 9/00, B60C 27/00, B60R 11/02, B60P 7/06, B62D 55/28, F41H 7/02, B62D 55/18

(54) **Halterung bzw. Aufnahmevorrichtung für einen Schneegreifer, insbesondere für ein Kettenfahrzeug wie Berge- und/oder Pionierpanzer**
Holder/holding device for a snow track, in particular for a track vehicle such as a mountain tank and/or armoured engineering vehicle
Fixation ou dispositif de réception pour un dispositif de saisie de neige, notamment pour un véhicule à chenilles comme un véhicule blindé de montagne et/ou de génie militaire

(30) Priorität: 01.09.2009 DE 102009039576
(43) Veröffentlichungstag der Anmeldung: 02.03.2011
(73) Patentinhaber: Rheinmetall Landsysteme GmbH, 24107 Kiel (DE)
(72) Erfinder: Krieger, Tino, 23619 Hamberge (DE); Witt, Tino, 24146 Kiel (DE)
(74) Vertreter: Dietrich, Barbara

(56) Entgegenhaltungen:
- DE-A1- 2 241 771
- DE-U1- 8 624 252
- DE-U1-202004 001 879
- US-B1- 6 371 344
- US-B1- 7 178 848

## Beschreibung

Die Erfindung beschäftigt sich mit dem Problem der sicheren und ausreichenden Unterbringung eines Schneegreifers auf / an einem Kettenfahrzeug. Derartige Schneegreifer werden in der Regel im Schneeeinsatz eines Kettenfahrzeuges benötigt. Die Anzahl der benötigten und mitzuführenden Greifer variiert und ist abhängig vom Einsatzort (Eis, Schnee oder feiner Sand). Die Schneegreifer werden in einem bestimmten Muster auf die Kette gezogen.

Derartige Schneegreifer werden in der Regel flach auf der Fahrzeugwanne eines Fahrzeuges befestigt. Dadurch wird jedoch nach dem Stand der Technik eine große Fläche benötigt. Weitere Ausrüstungsgegenstände können dadurch nicht mitgeführt werden. Reicht der freie Platz hingegen nicht aus, müssen die Schneegreifer in oder an Staukisten befestigt werden. Die Nutzung dieses Staukastenplatzes ist dann für andere, wettergeschützt mitzuführende Baugruppen nicht nutzbar. Die Anzahl der Staukästen selbst reicht wiederum nicht aus, um alle Schneegreifer so aufnehmen zu können.

Bestrebungen, Möglichkeiten für den Transport individueller Ausrüstungsgegenstände zu schaffen, sind bereits bekannt und erkennbar.

So beschreibt die DE 10 2005 041 493 B3 eine Vorrichtung zum Ablegen eines Heckauslegers eines Brückenverlegers. Ein Transportgestell für Abbruchwerkzeuge, die mitgeführt werden müssen, offenbart die DE 10 2005 003 749 B3.

Aus der DE 10 2009 019 866.0 (nicht vorveröffentlicht), ist eine modulare Plattform bzw. Ausrüstungsträger zum Transportieren unterschiedlicher Ersatztriebwerke, Ausrüstungen, Kisten, Teilen oder sonstigen Aggregaten von Fahrzeugen auf Fahrzeugen, wie beispielsweise eines Bergepanzers oder eines Pionierpanzers, bekannt. Diese zeichnet sich dadurch aus, dass modularer Ausrüstungsträger eingebunden ist, der aus einer Grundplattform und zusätzlichen Adapter bzw. Anbausätzen besteht. Dadurch wird es möglich, mehrere und auch verschiedene Ausrüstungsgegenstände im Wechsel oder gleichzeitig auf bzw. am Fahrzeug zu befestigen. In einer besonderen Ausführung wird angestrebt, dass mit diesem Ausrüstungsträger auch bereits vorhandene Fahrzeuge nachgerüstet werden können.

Die DE 86 24 252 U1 betrifft eine Einrichtung zur Aufnahme und Arretierung von Gegenständen wie Behälter oder dgl. an Fahrzeugen. Die Behälter dienen ihrerseits zur Aufnahme von Flüssigkeiten und umfassen einen Aufnahmerahmen, an dem eine klappbar gelagerte Sicherung gegen Vertikalbewegungen der Behälter eingebunden ist. Die Einrichtung besitzt ein Aufnahmegestell mit Rahmenteilen zur Abstützung der Behälter in der Horizontalen. Am Gestell befinden sich schwenkbar lagernde, zueinander parallele Haltebügel für jeden der Behälter, wobei die Haltebügel mit ihren Schwenkhebeln zur zwangsläufigen Koppelung für die Öffnungs- bzw. Schließbewegung in der Art von Parallelogrammgetrieben über Kuppelhebel gelenkig verbunden sind.

Aus der DE 22 41 771 A1 ist eine Anordnung von Zusatzkanistern für Kraftstoff an Kampffahrzeugen bekannt. Dazu werden mehrere zu einer Einheit zusammengefasste Kanister am Heck des Fahrzeuges in einem Rahmen zwischen seitlichen Haltern verschwenkbar angeordnet, derart, dass der Rahmen über waagerechte Drehachsen in eine Einhäng- und Abwurfstellung, in eine Klemmstellung sowie in eine Entnahmestellung verschwenbar ist. In der Klemmstellung ist jeder Kanister mit dem als Drehachse ausgebildeten Kraftstoffentnahmerohr koppelbar.

Die Erfindung stelle sich die Aufgabe, eine Platz sparende Aufnahme insbesondere für Schneegreifer aufzuzeigen, sodass als ein Vorteil sich Platz für andere Ausrüstungsgegenstände ergibt.

Gelöst wird die Aufgabe durch die Merkmale des Patentanspruchs 1. Vorteilhafte Ausgestaltungen sind in den Unteransprüchen enthalten.

Der Erfindung liegt die Idee zugrunde, die Schneegreifer nicht flach auf dem Fahrzeug anzubringen, sondern vertikal. Dazu wird eine Halterung bzw. Aufnahmevorrichtung so konzipiert, dass die Schneegreifer nebeneinander eingeschoben werden können, also vertikal zur Fahrzeugwanne angeordnet werden können. Die Halterung verfügt des Weiteren über Aufnahmebohrungen, sodass darüber oder daneben weitere Halter bzw. Halterungen befestigt werden können. So kann nunmehr eine größere Anzahl von Schneegreifern mitgeführt werden, als bisher möglich. Die Halterung besitzt nur eine geringe Anzahl von Schraubverbindungen zur Befestigung der Schneegreifer, sodass ein schnelles Entnehmen selbiger geschaffen wird. So sieht die Halterung beispielsweise nur das Lösen von 4 Schrauben zum Entnehmen von 10 Schneegreifern vor.

Nicht ausgeschlossen ist aber auch eine Anbringung der Halterung an der Fahrzeugwanne derart, dass die Schneegreifer übereinander liegend in den freien Raum, das heißt, von der Wanne wegweisend, da die Konstruktion der Halterung auch eine Entnahme bei dieser Anbindung ermöglicht.

Anhand eines Ausführungsbeispiels mit Zeichnung soll die Idee näher erläutert werden.

Es zeigt:
- Fig. 1: eine Aufnahmevorrichtung für beispielsweise 5 Schneegreifer,
- Fig. 2a-c: Varianten der Aufnahmevorrichtung,
- Fig. 3: eine Anbindungsform der Aufnahmevorrichtung an eine Fahrzeugwanne.

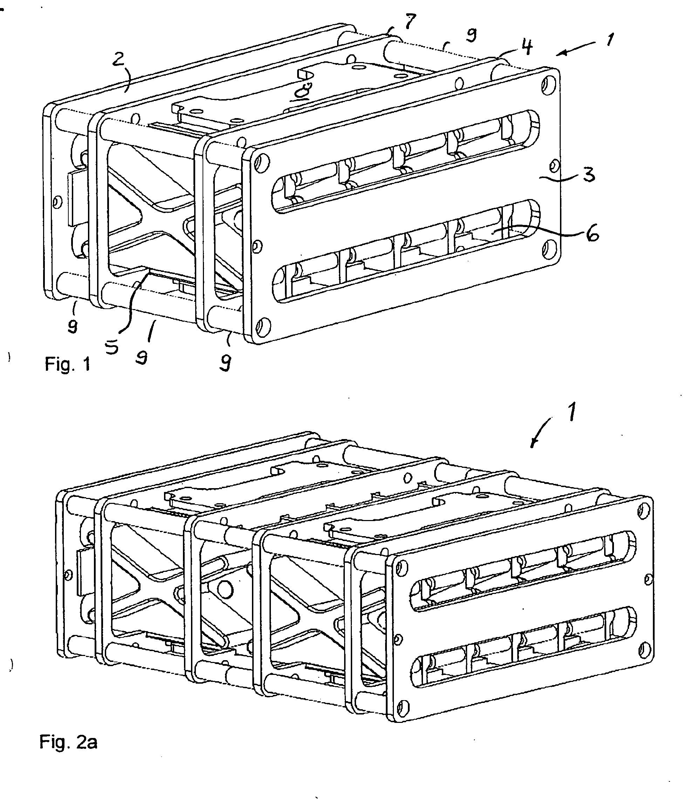

In Fig. 1 ist eine Aufnahmevorrichtung 1, bestehend hier aus zwei Deckel 2, 3 (das Einzelmodul), wenigstens einem Halter 4 mit vorzugsweise Führungen 5 für Schneegreifer 6. Die Anzahl der Schneegreifer 6 für diese Aufnahmevorrichtung 1 beträgt - in diesem Beispiel - fünf. Bei Einbindung eines oder mehrerer weiterer Halter 7 sind bevorzugt (Verbindungs-) Streben 8 oder dergleichen zwischen diesen oben und unten vorzusehen. Die einzelnen Teile selbst sind über Verbindungselemente 9 miteinander verbunden. Dies können in einfachster Form Rohre (rohrförmig rechteckig etc.) sein, die über Verschraubungsmöglichkeiten (stirnseitig) miteinander verbunden werden.

Die einzelnen Teile der Aufnahmevorrichtung 1 sind vorzugsweise so ausgeführt, dass sie wenig Gewicht mit sich bringen und ein kleines Eigengewicht der Aufnahmevorrichtung 1 bewirken. So kann als Material auch Aluminium, Kunststoff oder dergleichen verwendet werden.

Ist diese Bedingung nicht vorgegeben, kann der Halter 4 selbst auch voluminöser / breiter ausgeführt sein, die Streben 8 dann wegfallen. Auch kann eine geschlossene Variante der Aufnahmevorrichtung 1 dann geschaffen werden, wo Deckel und Seitenwände dann vollflächig sind.

Mit Lösen der Schrauben vom Deckel 3 und / oder 2 können die Schneegreifer 6 in einfacher Art und Weise schnell herausgezogen und bei Nichtbenötigen wieder eingeführt werden. Die Führungen 5 ermöglichen ein schnelles Einschnäbeln der Schneegreifer 6 in / an den Halter 4.

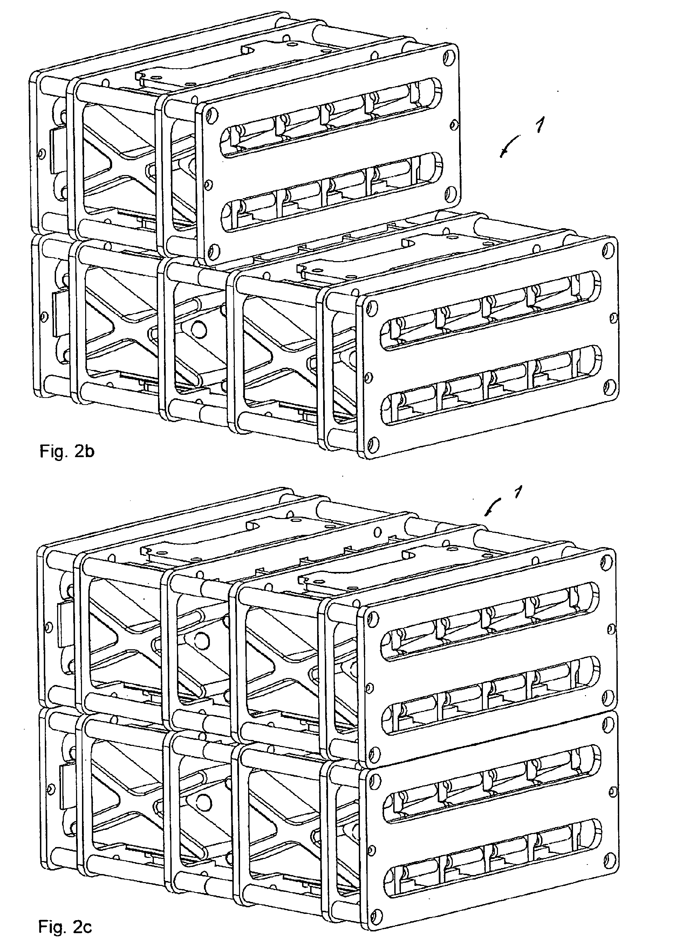

Die Aufnahmevorrichtung 1 ist - als Modul ausgeführt - beliebig erweiterbar, wie in den Fig.2a-c dargestellt. Dadurch können ohne weiteres 10 Schneegreifer, 15 oder gar 20 Platz sparend mitgeführt werden.

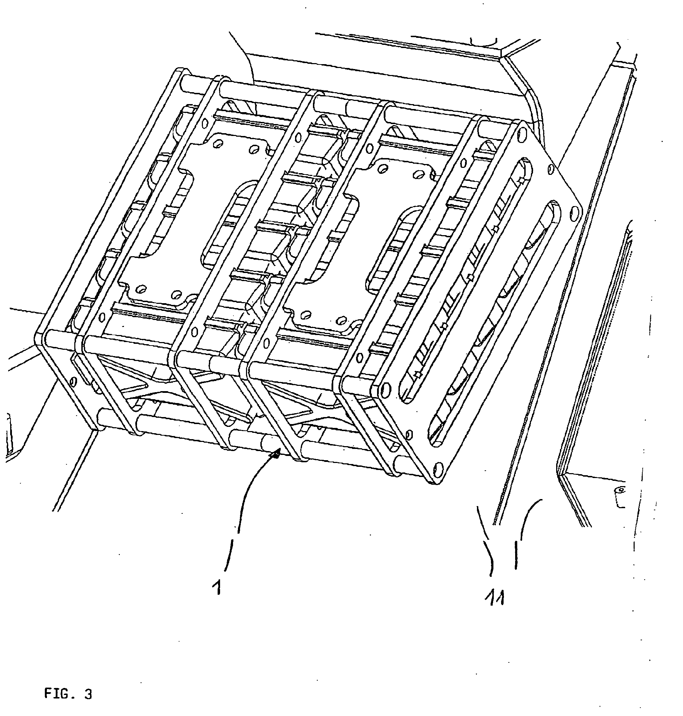

Fig. 3 deutet eine mögliche Befestigung am Fahrzeug (hier Fahrzeugwanne 11) an. Dazu können die zwischen den Haltern 7 eingebundenen Streben 8 herangezogen werden. Die Aufnahmevorrichtung 1 wird dazu über vorzugsweise Schraubverbindungen und der / den Streben 8 an der Wanne 11 befestigt. Alternative Befestigungen sind ebenfalls möglich.

Bei Schrägen der Fahrzeugwanne 11 ist es vorstellbar, dass die Aufnahmevorrichtung 1 über die Verbindungselemente 9 an der Fahrzeugwanne 11 eingehängt werden kann. Diese Verbindungselemente 8 können dazu versteift werden.

## Patentansprüche

1. Aufnahmevorrichtung (1) für Schneegreifer (6), insbesondere für ein Kettenfahrzeug wie Berge- und / oder Pionierpanzer, aufweisend wenigstens einen Deckel (2, 3), wenigstens einem Halter (4) sowie Verbindungselemente (9), sodass ein leichtes Gebilde geschaffen wird, wobei die Aufnahmevorrichtung (1) an der Fahrzeugwanne (11) angebracht ist, **dadurch gekennzeichnet, dass** die Schneegreifer (6) senkrecht in der Aufnahmevorrichtung (1) angeordnet bzw. einschiebbar sind, wozu der Halter (4) Führungen (5) für die Schneegreifer (6) aufweist.

2. Aufnahmevorrichtung nach Anspruch 1, **dadurch gekennzeichnet, dass** zwei oder mehr Halter (4) eingebunden sind.

3. Aufnahmevorrichtung nach Anspruch 2, **dadurch gekennzeichnet, dass** bei mehreren Haltern (4) Verbindungsstreben (8) insbesondere zur Stabilisierung eingebunden sind.

4. Aufnahmevorrichtung nach einem der Ansprüche 1 bis 3, **dadurch gekennzeichnet, dass** die Verbindungselemente (9) rohrförmig mit stirnseitigen Verschraubungsmöglichkeiten sind.

5. Aufnahmevorrichtung nach einem der Ansprüche 1 bis 4, **dadurch gekennzeichnet, dass** das Material Aluminium, Kunststoff oder dergleichen ist.

6. Aufnahmevorrichtung nach einem der Ansprüche 1 bis 5, **dadurch gekennzeichnet, dass** sie durch mehrere Haltemodule (1') gebildet wird.

7. Aufnahmevorrichtung nach einem der Ansprüche 1 bis 6, **dadurch gekennzeichnet, dass** sie an der Fahrzeugwanne (11) angeschraubt ist.

8. Aufnahmevorrichtung nach einem der Ansprüche 1 bis 6, **dadurch gekennzeichnet, dass** bei Schrägen der Fahrzeugwanne (11) die Aufnahmevorrichtung (1) über die Verbindungselemente (9) an der Fahrzeugwanne (11) eingehängt werden kann.

9. Aufnahmevorrichtung nach Anspruch 1, **dadurch gekennzeichnet, dass** bei einer geschlossenen Variante der Halter (4), der Deckel (2, 3) sowie Seitenwände vollflächig sind.

10. Aufnahmevorrichtung nach einem der Ansprüche 1 bis 9, **dadurch gekennzeichnet, dass** die Aufnahmerichtung (1) quer oder mit ihrer Stirnseite zur Fahrzeugwanne (11) ausgerichtet angebracht ist.

## Claims

1. Receiving apparatus (1) for snow grippers (6), in particular for a tracked vehicle such as a wrecker and/or combat engineering tractor, having at least one cover (2, 3), at least one holder (4) and connecting elements (9), with the result that a light structure is produced, the receiving apparatus (1) being attached to the vehicle tub (11), **characterized in that** the snow grippers (6) are arranged or can be pushed in perpendicularly in the receiving apparatus (1), to which end the holder (4) has guides (5) for the snow grippers (6).

2. Receiving apparatus according to Claim 1, **characterized in that** two or more holders (4) are incorporated.

3. Receiving apparatus according to Claim 2, **characterized in that**, in the case of a plurality of holders (4), connecting struts (8) are incorporated, in particular for stabilization.

4. Receiving apparatus according to one of Claims 1 to 3, **characterized in that** the connecting elements (9) are tubular with end-side screw options.

5. Receiving apparatus according to one of Claims 1 to 4, **characterized in that** the material is aluminium, plastic or the like.

6. Receiving apparatus according to one of Claims 1 to 5, **characterized in that** it is formed by a plurality of holding modules (1').

7. Receiving apparatus according to one of Claims 1 to 6, **characterized in that** it is screwed to the vehicle tub (11).

8. Receiving apparatus according to one of Claims 1 to 6, **characterized in that**, in the case of sloped faces of the vehicle tub (11), the receiving apparatus (1) can be mounted on the vehicle tub (11) via the connecting elements (9).

9. Receiving apparatus according to Claim 1, **characterized in that**, in a closed variant, the holder (4), the cover (2, 3) and side walls are solid.

10. Receiving apparatus according to one of Claims 1 to 9, **characterized in that** the receiving apparatus (1) is attached such that it is oriented transversely or with its end side towards the vehicle tub (11).

## Revendications

1. Dispositif de réception (1) pour des crampons à neige (6), en particulier pour un véhicule automobile tel qu'un véhicule blindé de montagne et/ou de génie militaire, présentant au moins un couvercle (2, 3), au moins un dispositif de retenue (4) ainsi que des éléments de liaison (9), de telle sorte qu'une structure légère soit produite, le dispositif de réception (1) étant monté sur la caisse du véhicule (11), **caractérisé en ce que** les crampons à neige (6) sont disposés ou peuvent être enfoncés verticalement dans le dispositif de réception (1), le dispositif de retenue (4) présentant à cet effet des guides (5) pour les crampons à neige (6).

2. Dispositif de réception selon la revendication 1, **caractérisé en ce que** deux ou plus de deux dispositifs de retenue (4) sont prévus.

3. Dispositif de réception selon la revendication 2, **caractérisé en ce que** lorsque plusieurs dispositifs de retenue (4) sont prévus, des entretoises de liaison (8) sont prévues notamment à des fins de stabilisation.

4. Dispositif de réception selon l'une quelconque des revendications 1 à 3, **caractérisé en ce que** les éléments de liaison (9) sont tubulaires avec des possibilités de vissage sur les côtés frontaux.

5. Dispositif de réception selon l'une quelconque des revendications 1 à 4, **caractérisé en ce que** le matériau est de l'aluminium, du plastique ou similaire.

6. Dispositif de réception selon l'une quelconque des revendications 1 à 5, **caractérisé en ce qu'**il est formé par plusieurs modules de retenue (1').

7. Dispositif de réception selon l'une quelconque des revendications 1 à 6, **caractérisé en ce qu'**il est vissé à la caisse du véhicule (11).

8. Dispositif de réception selon l'une quelconque des revendications 1 à 6, **caractérisé en ce que** lors de l'inclinaison de la caisse du véhicule (11), le dispositif de réception (1) peut être accroché à la caisse du véhicule (11) par le biais d'éléments de liaison (9).

9. Dispositif de réception selon la revendication 1, **caractérisé en ce que** dans une variante fermée des dispositifs de retenue (4), le couvercle (2, 3) ainsi que des parois latérales sont réalisés sur toute la surface.

10. Dispositif de réception selon l'une quelconque des revendications 1 à 9, **caractérisé en ce que** le dispositif de réception (1) est monté transversalement ou avec son côté frontal orienté vers la caisse du véhicule (11).
